# EUROPÄISCHE PATENTSCHRIFT

(11) **EP 1 241 440 B1**
(45) Veröffentlichungstag und Bekanntmachung des Hinweises auf die Patenterteilung: **23.03.2005**
(21) Anmeldenummer: 01130068.8
(22) Anmeldetag: 18.12.2001
(51) Int. Cl.: G01B 11/27

(54) **Riemenscheiben-Ausrichtgerät mit Laser und Mattscheibe, Winkelskala**
Alignment device of pulleys with laser and ground glass screen, angle scale
Dispositif d'alignement de poulies avec laser et verre dépoli, échelle d'angle

(30) Priorität: 22.12.2000 DE 10064814
(43) Veröffentlichungstag der Anmeldung: 18.09.2002
(73) Patentinhaber: Prüftechnik Dieter Busch AG, 85737 Ismaning (DE)
(72) Erfinder: Lysen, Heinrich, 85748 Garching (DE); Gough, Jonathan, 85737 Ismaning (DE)

(56) Entgegenhaltungen:
- US-A- 6 031 616
- US-A- 6 098 297

## Beschreibung

Die Erfindung betrifft eine Vorrichtung zum Ausrichten von Riemenscheiben.

Eine solche Vorrichtung ist bekannt aus der US 6,031,616, Erfinder Seiffert.
Diese Vorrichtung ist insofern von Vorteil, weil der dort vorgesehene Spiegel die Messgenauigkeit hinsichtlich einer Winkelkoordinate erheblich verbessert.

Dieser Vorrichtung haftet jedoch der Nachteil an, dass eine Bedienperson zum Ablesen des Gerätes dieses nicht nur aus relativer Nähe beobachten und interpretieren muss, sondern zu diesem Zweck auch die Blickrichtung über einen relativ weiten Winkel mehrfach ändern muss. Nur auf diese Weise ist es möglich, die dort vorgesehenen Ablese-Lineale zu inspizieren. Dieses Problem ist von nicht allzugrosser Bedeutung, sofern für das Ausrichten von Riemenscheiben jeweils zwei Personen zusammenarbeiten, so dass die erste Person das Instrument ablesen kann und die zweite Person die eigentliche Justage von Maschinen durchführt.

Es ist daher aber für eine einzeln arbeitende Bedienperson schwierig, gleichzeitig das Gerät nach US 6,031,616 abzulesen und einen Justagevorgang auszuführen. Außerdem kann das bekannte Gerät in nur rein qualitativer Weise verwendet werden, irgendwelche quantitativen Angaben zum Ausrichten von Riemenscheiben werden nicht gemacht oder sind nicht ersichtlich.
Dieses Problem wird durch die Verbesserung gemäß der Erfindung nach dem Anspruch 1 gelöst.
Zur Lösung des genannten Problemes wird nämlich vorgeschlagen, einen Teil der auf dem primären Target auftreffenden Lichtstrahlen durch dieses hindurchtreten zu lassen, so dass es auch von dessen Rückseite abgelesen werden kann. Auf diese Weise ist es also möglich, ohne Wechsel der Blickrichtung das primäre Target und gleichzeitig das sekundäre Target abzulesen. (Wie in der genannten Patentschrift angegeben, enthält das sekundäre Target gleichzeitig eine einen flach divergierenden Laserstrahl aussendende Einrichtung.)
Um einen Teil der auf dem primären Target auftreffenden Lichtstrahlen durch dieses hindurchgehen zu lassen, wird gemäß der Erfindung vorgeschlagen, einen oder mehrere Ausbrüche in dem Körper des primären Target vorzusehen, oder dieses aus einem transparenten oder opalisierendem, milchglasartigem Material herzustellen. Auf diese Weise ist es möglich, mittels einer Mattscheibe, oder nur einer einfachen Bezugslinie, ein alternatives primäres Target bereitzustellen. Das primäre Target kann daher gemäss der Erfindung dabei so ausgestaltet sein, dass man entweder beide Referenzflächen beobachten kann, oder nur die als alternatives Target modifizierte Referenzfläche.
Gemäß der Erfindung wird in einer weitergehenden Ausgestaltung vorgesehen, eine Skala auf zumindest einen Teil des Gerätes anzubringen. Diese Skala ist bevorzugt im Bogenmaß graduiert und stellt Vergleichswinkel zur Verfügung. Auf diese Weise kann bereits aus einem. ersten beobachteten Verdrehwinkel anhand der ungefähren, anhand der Skala abgeschätzten Maßzahl, mittels einer vorgegebenen einfachen Formel errechnet werden, in welchem Maße der Elevationswinkel der Riemenscheibenachse mittels Unterlegscheiben zu korrigieren ist, oder durch welchen Versatz von Maschinenfüßen eine azimutale Fehlausrichtung angenähert beseitigt werden kann.

Die Erfindung wird anhand der Zeichnung verdeutlicht.
Fig. 1 zeigt, zusätzlich zum Stand der Technik vorgesehene Ausbrüche 110, 120
Fig. 2 zeigt in einer querschnittsartigen Seitenansicht das primäre Target, auf welches Lichtstrahlen auftreffen und durch dieses hindurchtreten können
Fig. 3 zeigt eine Skala zum Abschätzen des Bogenmaßes einer Fehlausrichtung

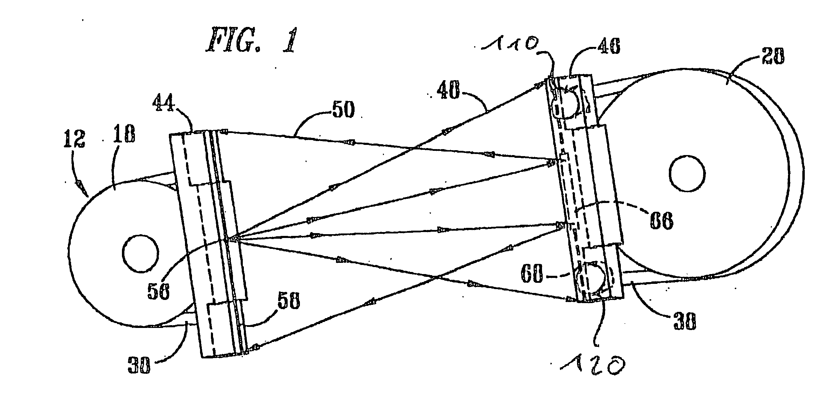

Die Fig. 1 ist weitgehend der og. US Patentschrift entnommen. Diese zeigt, wie auf zwei Riemenscheiben das von Seiffert erfundene Gerät aufzusetzen und zu verwenden ist. Darüberhinaus werden die Modifikationen der vorliegenden Erfindung gezeigt, und zwar in Form von Löchern oder Ausbrüchen, durch die der primäre Flachlichtstrahl 48 anteilig hindurchtreten kann, sofern er nicht durch den Spiegel 66 reflektiert wird oder als Lichtband 68 auf das primäre Target 46 projiziert wird.

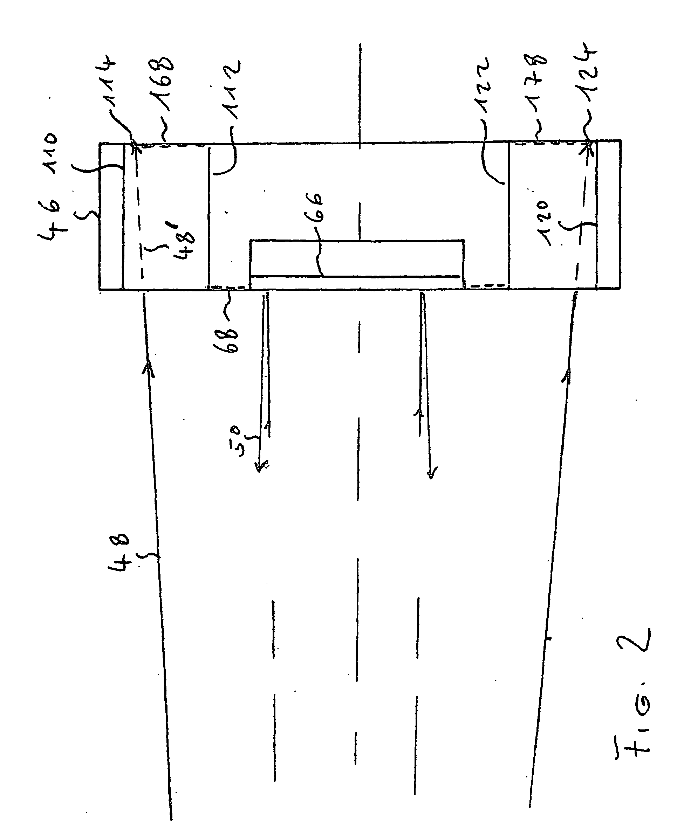

Diese Verhältnisse werden in Fig. 2 detailierter dargestellt. Der Randstrahl 48 kann als Strahl 48' durch die die Bezugsziffern 110, 112 dargestellte Öffnung treten und wird z.B. als Randpunkt 114 auf einer nicht näher identifizierten Auftreff-Fläche, die z.B. nach Art einer Mattscheibe ausgeführt sein kann, abgebildet. Die genannte Mattscheibe ist damit das genannte alternative primäre Target. Zu dem Randpunkt 114 gehört ein auf gleiche Weise abgebildetes Lichtband 168, welches in vergleichbarer Weise abgelesen und ausgewertet wird wie das auf dem regulären primären Target abgebildete Lichtband 68.
Eine zweite Öffnung im primären Target 46 wird durch die Bezugsziffern 120, 122 dargestellt.
Der angegebene Randpunkt 124 ist sinngemäss mit Randpunkt 114 zu vergleichen. In ähnlicher Weise ist Lichtband 178 mit Lichtband 168 zu vergleichen. Es ist ersichtlich, dass zum Ablesen der Lichtbänder 168, 178 und des Lichtbandes 58 (Fig. 1) annähernd keine Änderung der Blickrichtung der Bedienperson erforderlich ist.

In einer anderen Ausgestaltung der Erfindung wird das primäre Target 46 aus einem im wesentlichen einheitlichen Werkstoff hergestellt, welcher transparent sein kann, z.B. aus Acrylglas gefertigt sein kann. Dieser kann auch eingefärbt sein und insbesondere auch opalisierende Eigenschaften aufweisen, so dass in direkter Weise eine Mattscheibe für hindurchtretendes Licht bereitgestellt wird, und auch frontal auftreffendes Licht zurückgestreut wird und somit beobachtet werden kann.

In einer weiteren Ausgestaltung der Erfindung werden die oben beschriebenen Massnahmen auf das sekundäre Target angewendet. Eine solche Ausgestaltung hat den Vorteil, dass eine Bedienperson nicht direkt in den primären, divergenten und ebenen Laserstrahl sehen kann, der von der Lichtquelle 56 ausgeht.

In einer anderen Ausgestaltung der Erfindung werden die oben beschriebenen Massnahmen auf beide Targets angewendet, so dass eine Bedienperson die Ausricht-Messeinrichtung wahlweise von einer oder der anderen Seite aus beobachten kann, oder eine zentrale Perspektive wählen kann.

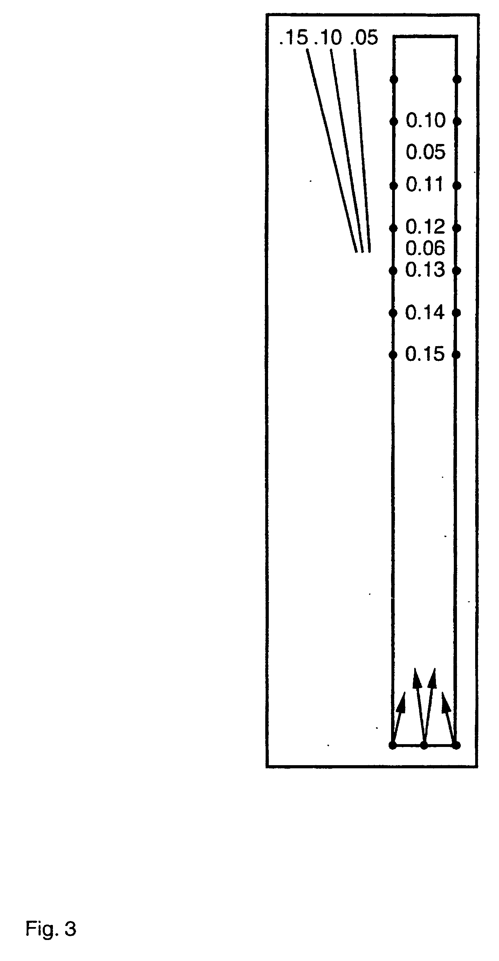

Aus Fig. 3 ist ersichtlich, wie eine Skala funktioniert, anhand der eine beobachtete Fehlausrichtung quantifiziert werden kann, durch Angabe eines ungefähren Winkelwertes im Bogenmaß. Neben einer direkten Skala, welche einen unmittelbaren, subjektiven Vergleich der Winkellage einer durch einen aufgefächterten Strahl erzeugten Lichtlinie ermöglicht, ist eine weitere Skala vorhanden, welche eine solche Winkellage anhand von Seitenverhältnissen eines Dreieckes abzuschätzen gestattet. In beiden Fällen kann anhand eines ermittelten Winkels, welcher bevorzugt im Bogenmaß angegeben wird, beispielsweise die Dicke von erforderlichen Unterlegscheiben ausgerechnet werden, mit denen eine Maschine in Elevationsrichtung ihrer Wellenachse ausgerichtet werden kann. Hierzu ist lediglich die Formel anzuwenden: d (Unterlegscheibe) = Fußabstand * Fehlwinkel.. Ein negativer Wert bedeutet, daß die Unterlegscheiben am anderen Fußpaar der Maschine zu montieren sind.

## Patentansprüche

1. Riemenscheiben-Ausrichtgerät, mit
- einem sekundären Target (44), welches auf eine erste Riemenscheibe auflegbar ist und welches eine Einrichtung (56) zum Aussenden eines divergenten, ebenen Laserstrahl (48) aufweist
- einer auf dem sekundären. Target angebrachten Referenzlinie (58)
- einem primären Target (46), welches auf eine zweite Riemenscheibe auflegbar ist und einen im wesentlichen planen Reklektor (66) aufweist
- mindestens einer auf dem primären Target angebrachten Referenzlinie (68)
- in dem primären Target vorhandenen Ausbrüchen oder Öffnungen (110, 120), durch welche der divergente ebene Laserstrahl anteilig hindurchtreten kann
- einer Mattscheibe zur Darstellung und Sichtbarmachung des anteilig hindurchtretenden ebenen Laserstrahl-Lichtes

2. Riemenscheiben-Ausrichtgerät nach Anspruch 1, enthaltend eine auf einem Gehaüse angebrachte Winkelskala, welche im Bogenmaß graduiert ist und die Lage eines aufgefächterten Lichtstrahles relativ zu den Kanten des Gehäuses angenähert zu bestimmen gestattet.

## Claims

1. Pulley disc alignment appliance, having
- a secondary target (44) which can be placed on a first pulley disc and which has a device (56) for transmission of a divergent, planar laser beam (48),
- a reference line (58) which is fitted to the secondary target,
- a primary target (46) which can be placed on a second pulley disc and has an essentially planar reflector (66),
- at least one reference line (68) which is fitted to the primary target,
- cutouts or openings (110, 120) which are provided in the primary target and through which a proportion of the divergent planar laser beam can pass, and
- a matt disc for displaying and visualization of the proportion of the planar laser beam light that passes through.

2. Pulley disc alignment appliance according to Claim 1, containing an angle scale which is fitted to a housing and is graduated in angular units and makes it possible to approximately determine the position of a fanned-out light beam relative to the edges of the housing.

## Revendications

1. Appareil d'alignement de poulies comprenant
- une cible secondaire (44) qui peut être appliquée sur une première poulie et qui présente un dispositif (56) pour émettre un rayon laser plan divergent (48),
- une ligne de référence (58) appliquée sur la cible secondaire,
- une cible primaire (46) qui peut être appliquée sur une deuxième poulie et qui présente un réflecteur (66) pour l'essentiel plan,
- au moins une ligne de référence (68) appliquée sur la cible primaire,
- des cassures ou des ouvertures (110, 120) présentes dans la cible primaire à travers lesquelles le rayon laser plan divergent peut passer
- un verre dépoli pour représenter la visualisation de la lumière du rayon laser plan qui traverse de manière proportionnelle.

2. Appareil d'alignement de poulies selon la revendication 1, comprenant une graduation angulaire appliquée sur un boîtier, laquelle est graduée en mesure d'arc et permet de déterminer de manière approximative la position d'un rayon de lumière en éventail par rapport aux bords du boîtier.
